(19) Europäisches Patentamt
European Patent Office
Office européen des brevets

(11) Publication number: **0 362 839**
**A1**

# (12) EUROPEAN PATENT APPLICATION

(21) Application number: **89118486.3**

(51) Int. Cl.5: **G02F 1/35 , H04N 3/12**

(22) Date of filing: **05.10.89**

(30) Priority: **05.10.88 JP 252746/88**

(43) Date of publication of application:
**11.04.90 Bulletin 90/15**

(84) Designated Contracting States:
**DE FR GB**

(71) Applicant: **SUMITOMO ELECTRIC INDUSTRIES, LTD.**
**5-33, Kitahama 4-chome Chuo-ku**
**Osaka-shi Osaka-fu(JP)**

(72) Inventor: **Umegaki, Shinsuke**
**No. 4-15, Chiyogoka 9-chome Aso-ku**
**Kawasaki-shi Kanagawa(JP)**
Inventor: **Uemiya, Takafumi Osaka Works Sumitomo Electric**
**Ind. Ltd. No. 1-3, Shimaya 1-chome Konohana-ku**
**Osaka-shi Osaka(JP)**
Inventor: **Uenishi, Naota Osaka Works Sumitomo Electric**
**Ind. Ltd. No. 1-3, Shimaya 1-chome Konohana-ku**
**Osaka-shi Osaka(JP)**
Inventor: **Shimizu, Yo Osaka Works Sumitomo Electric**
**Ind. Ltd. No. 1-3, Shimaya 1-chome Konohana-ku**
**Osaka-shi Osaka(JP)**

(74) Representative: **Patentanwälte Grünecker, Kinkeldey, Stockmair & Partner**
**Maximilianstrasse 58**
**D-8000 München 22(DE)**

## (54) Display unit.

(57) A thin, lightweight display unit (A) which is high in response speed and resolution yet low in power consumption is described. The present invention includes a non-linear optical layer (1) with electrodes (21) formed on the layer. A polarizer (3) is formed on one surface of the layer (1) to apply a linear polarized light beam to the picture elements (G) formed by the electrodes (21). Preferably, the non-linear optical layer (1) is formed of a compound material.

FIG. 1

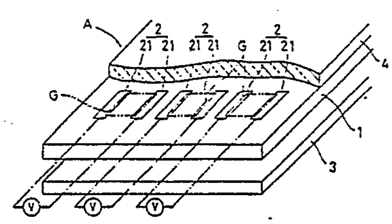


EP 0 362 839 A1

Xerox Copy Centre

# DISPLAY UNIT

## BACKGROUND OF THE INVENTION

### Field of the Invention

This invention relates to display units, and more particularly to a display unit which is suitable for display of picture data or the like, having a plurality of picture element parts.

### Description of the Prior Art

Most conventional display units for displaying picture data or the like utilize a cathode ray tube. Since a cathode ray tube is a large glass tube, it is difficult to reduce the weight of the display unit. In addition, the cathode ray tube has a relatively large depth with respect to the size of the screen, which makes it difficult to reduce the thickness of the display unit.

Recently a thin and light display unit in which liquid crystal dots are arranged in matrix form has been employed in a portable television set or the like. However, the use of a liquid crystal display unit has various functional deficiencies. The liquid crystal is slow to respond to input signals. This can cause a "residual image" to appear. It is not always possible for the display unit to completely clear image. Accordingly, it is not suitable to use liquid crystal for a large screen display unit to display images high in picture quality and resolution.

To overcome some of the limitations of liquid crystal display units, there have been proposed a variety of display panels utilizing the phenomenon of electro-luminescence (EL) or plasma light emission, both being high in response speed to an input signal. One operational difficulty with this type of display is that it requires a high drive voltage and consumes a large amount of power.

## SUMMARY OF THE INVENTION

In view of the above mentioned operational disadvantages of the various known displays, an object of the present invention is to provide a display unit which can be constructed so as to be thin and lightweight, responds quickly to an input signal, can display images high in picture quality and has a large screen, and yet consumes little power.

The foregoing object has been achieved by providing a display unit which, according to the present invention, comprises a flat, plate-shaped, non-linear optical layer having a secondary non-linear optical effect, a plurality of electrode pairs arranged on the non-linear layer to form picture element parts thereon, the electrode pairs applying electric fields to the picture elements parts so as to change the polarization component of light applied to the picture elements, a polarizer arranged on one side of the non-linear optical layer for applying a linearly polarized light beam to the picture element parts, and an analyzer arranged on the other side of the non-linear optical layer for transmitting only a particular light beam to the picture element parts.

In the display unit, preferably the non-linear optical layer is made of a compound material which is prepared by dispersing a material having a secondary non-linear optical effect in a binder such as macromolecular material or glass material.

Furthermore, in the display unit, preferably electrodes forming each of the electrode pairs are buried in the non-linear optical layer.

The term "elliptically polarized light" as used herein is intended to include circularly polarized light corresponding to the elliptically polarized light where the components are equal in intensity, and linearly polarized light which is part of the elliptically polarized light.

When, in the display unit of the present invention, electric fields corresponding to input signals controlled in level are applied to the picture element parts formed on the non-linear optical layer, then according to one of the secondary non-linear optical effects, namely, a so-called "Pockels effect", a certain component of the refractive index tensor changes with the electric fields thus applied. And when the linearly

polarized light from the polarizer is applied to each picture element part, the plane of polarization turns with the change in refractive index of the picture element, so that elliptically polarized light is formed. In the elliptically polarized light, the rate of the polarizing light components forming it changes with the electric field applied thereto, and therefore the particular polarized light components passing through the analyzer change in the quantity of light passing therethrough. The output light changes with the levels of the input signals to the picture element parts, thus displaying a picture or the like.

Furthermore, in the display unit of the invention, the non-linear optical layer made of the non-linear optical material is in the form of a flat plate. The picture element parts are formed by arranging a plurality of the electrode pairs on the flat, plate-shaped, non-linear optical layer. Therefore, the display unit of the invention can be constructed lightweight and thin compared with conventional display units.

The refractive indexes of the picture element parts change more quickly in response to input signals than do the orentations of liquid crystal elements. Therefore, the display unit can display a clear picture high in motion, and it is easy to increase the size of the screen, and to improve the picture quality. In addition, the above-described refractive index change occurs with a much lower drive voltage than the EL or plasma light emission, with the result being that the display unit has a reduced power consumption.

In the case where the non-linear optical layer is made of a compound material which is prepared by dispersing the non-linear optical material in a binder such as a macromolecular material or glass material, the non-linear optical layer can be formed by a conventional method of molding the macromolecular material.

In the case where the electrodes forming the electrode pairs are arranged in such a manner that they are buried in the non-linear optical layer, the application of electric fields to the picture element parts is achieved with high efficiency.

Other objects, features, and characteristics of the present invention, as well as methods of operation and functions of the related elements of the structure, and to the combination of parts and economies of manufacture, will become apparent upon consideration of the following description and the appended claims with reference to the accompanying drawings, all of which form a part of this specification, wherein like reference numerals designate corresponding parts in the various figures.

## BRIEF DESCRIPTION OF THE DRAWING

The advantages of the present invention may be better understood by study of the following Detailed Description of the Invention with reference to the Figures wherein:

FIGURE 1 a perspective view showing one example of a display unit according to this invention;

FIGURE 2(a) is a plan view showing a modification in arrangement of picture elements;

FIGURE 2(b) is a plan view showing a light shielding mask which is laid over the picture elements shown in FIGURE 2(a);

FIGURE 3(a) is an enlarged plan view showing an electrode pair of FIGURE 1;

FIGURE 3(b) is a plan view showing a modification of electrode shape which forms the electrode pair;

FIGURE 3(c} is a perspective view showing another modification of the electrodes forming the electrode pair;

FIGURE 4(a) is a horizontal sectional view of the example discussed below; and

FIGURE 4(b) is a vertical sectional view showing the example of the display unit described below.

## DETAILED DESCRIPTION OF THE PRESENTLY PREFERRED EXEMPLARY EMBODIMENT

One example of a display unit according to this invention will be described with reference to the accompanying drawings. The display unit of the present invention generally shown at A in FIGURE 1, comprises a flat, plate-shaped, non-linear optical layer 1 having a secondary non-linear optical effect, a plurality of electrode pairs 2 arranged in the non-linear optical layer to form a plurality of picture element parts G, a polarizing board 3 serving as a polarizer which is provided on one surface of the non-linear optical layer 1 (the lower surface of the layer 1 in FIGURE 1) for applying linearly polarized light to the picture element parts G, and an analyzing board 4 serving as an analyzer which is formed on the other surface of the non-linear optical layer 1, to transmit only a particular polarized light component of the elliptically polarized light which is produced when the above-described linearly polarized light is applied to

the picture element part G.

The flat, plate-shaped, non-linear optical layer 1 may be a monocrystal wafer made of a conventional non-linear optical material having a secondary non-linear optical effect, a monocrystal layer formed on a transparent substrate, a board made of a compound material which is prepared by dissolving or dispersing non-linear optical material in a binder of macromolecular material or glass material, or a compound material layer manufactured by forming the above-described compound material on a transparent substrate.

Examples of the non-linear optical material suitable for formation of the above-described monocrystal wafer or the monocrystal layer on the substrate are preferably non-organic, non-linear optical materials such as $LiNbO_3$, $KH_2PO_4$ (KDP), $KNbO_3$, $BaTiO_3$, $Sr_{0.75}Ba_{0.25}Nb_2$, $PbTiO_3$ and $KSr_2Nb_5O_{15}$, and organic non-linear optical materials such as 2-methly-4-nitroaniline (MNA)m3-methly-4-nitropyridine-N-oxide,urea,m-nitroanyiline, and compounds represented by the following chemical formula:

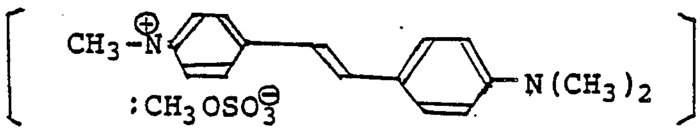

The above-described monocrystal wafer or monocrystal layer on the substrate may be formed by conventional crystal growth methods such as a gas phase growth method including a vacuum deposition method, a molecular beam epitaxial (MBE) method, a CVD method or ion plating method, or a liquid phase growth method including a Czochralski method, a Bridgman method, a solvent evaporating method or a solution cooling method.

In the board made of the compound material or in the compound material layer manufactured by forming the layer of the compound material on the transparent substrate, it is preferable that the non-linear optical material is oriented in the same direction in the binder, to show the secondary nonlinear optical effect.

The orientation of the non-linear optical material in the same direction in the binder may be achieved by a variety of methods. In one of the methods, which is most extensively employed in the art, the non-linear optical material used is an organic compound has an electron donor group, electron acceptive group, or $\pi$ electron group in the molecule, and has a large molecular ultra-polarizability B, and is simple in orientation in an electric field, and large in permanent dipole moment. The formation of the board and the compound layer by using the above-described compound containing the non-linear optical material is carried out in a strong electric field.

The organic non-linear optical material suitable for the orientation in the electric field may be dimethyl amino nitro stilben, p-nitroaniline, dimethyl amino nitroazobenzene, cyanine dye, or azo dye.

The formation of the compound material board or compound material layer in the strong electric field may be achieved by a conventional method using a macromolecular material or glass material.

For instance in the case where the binder is of macromolecular material, a method is employed in which the macromolecular material and the non-linear optical material are both dissolved in a solvent, and the compound material board or layer is formed by evaporation of the solvent; or a method is used in which the macromolecular material is molten by heating it to dissolve the non-linear optical material, and the macromolecular material is allowed to flow to form the compound material board or layer. In the former method, the evaporation of the solvent from the solution, and in the latter method, the cooling of the molten macromolecular material is carried out by direct application of voltage through electrodes or by indirect application of voltage such as corona discharge in an electric field so that the non-linear optical material is orientated as required. The macromolecular material forming the binder may be any one such as polymethyl methacrylate, polycarbonate, or polyvinylidene fluoride which can transmit the light used for display.

In order to increase the concentration of the organic non-linear material, the organic non-linear material may be bonded to the side chane of the macromolecular meterial. Futher, in order to prevent the orientation of the oriented organic non-linear material from relaxing, the macromolecular material may be cross-linked. As the cross-linking reaction, the following are exemplified: urethane reaction of -NCO and -OH, epoxy reaction of

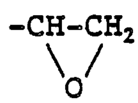 and $-NH_2$,

and hydrosilation reaction of ≡S-H and $CH_2 = CH$-.

In the case where the binder is of glass material, in order to prevent the above-described non-linear optical material from being decomposed by heat, a so-called "sol gel method" is extensively employed in which metal alkoxy such as ethyl silicate is used or is reacted with non-organic acid, to form a glass layer substantially similar to quartz glass at relatively low temperatures. In the sol gel method, solidification of the glass is carried out in an electric field with voltage applied in the above-described manner, so that the non-linear optical material is orientated as required.

Further, in order to increase the concentration of the non-linear optical material, an organic/inorganic compound material obtained by cross-linking a mixture of a compound represented by the following chemical formula:

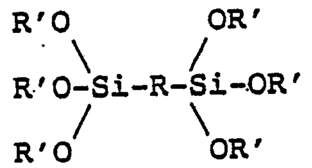

(R′ : alkyl,
R: straight chane macromolecular material)
and a silane compound, may be used as the binder. Further, it is possible to form the compound material of the glass material and the macromoleclar material having the non-linear optical material as the side chane.

The non-linear optical material may be orientated in the same direction in the compound material board or layer by other methods. For instance, the macromolecular material is used to form the binder; it is rolled in one direction by a cast method or hot extrusion method so that the macromolecular material is orientated in one direction, whereby the non-linear optical material dissolved or dispersed in the macromolecular material is oriented as required.

Each of the electrode pairs 2 forming the picture element parts G on the non-linear optical layer 1, as shown in FIGURES 1 or 3 is made up of two substantially rectangular electrodes 21 and 21 which are confronted with each other. The pairs of electrodes 21 and 21 are connected to power source V as indicated by the one-dot chain lines in FIGURE 1 so that the power sources V applies electric fields to the picture element parts, G, respectively.

The electrodes 21 and 21 (hereinafter referred to as confronted electrodes) forming each of the electrode pairs 2 are formed by a conventional electrode forming method such as a photo-resist method. Preferably, the electrodes are formed using a metal material such as aluminum or gold or a transparent conductive material such as ITO.

The arrangement of the electrode pairs 2 is not always limited to that which is shown in FIGURE 1. For instance, as shown in FIGURE 2(a), the electrode pairs 2 may be divided into a plurality of groups each consisting of three electrode pairs 2. In this case, the three primary colors may be assigned to the three electrodes pairs, and accordingly to the three picture elements parts G, respectively. Thus, the arrangement shown in FIGURE 2 is suitable for color display. A light shield mask 5 as shown in FIGURE 2(b), has through-holes 51 in alignment with the picture element parts G so as to apply light to the picture elements parts G only, and may be placed over the display unit. With the light shield board 5, the display unit can display images with increased clarity.

In the above-described embodiment, the confronted electrodes forming each of the electrode pairs are rectangular. However, the invention is not limited to that shape. For instance, as shown in FIGURE 3(b), the electrodes may be an assembly of a comb-shaped electrode 22 having five teeth and a comb-shaped electrode 23 having four teeth.

In order to apply refractive index changing electric fields to the picture element parts G with high efficiency, in the case where the non-linear optical layer 1 is made of monocrystal, the confronted electrodes 21 and 21 of each electrode pair 2 may be modified in arrangement in various manners with respect to the crystalline direction thereof. In the case where the non-linear optical layer 1 is made of the above-described compound material, the confronted electrodes may be modified with respect to the direction of orientation of the non-linear optical material in the compound material.

As shown in FIGURE 3(c), a pair of electrodes 24 and 24 may be formed on both sides of the non-linear optical layer 1, respectively, to form each electrode pair. In this modification in order to allow light to pass through the picture element part G, it is necessary to use a transparent conductive film to form the electrodes 24 and 24.

As shown in FIGURE 4(b), confronted electrodes 25 and 25 forming each electrode pair may be buried in the non-linear optical layer 1. In this case, the electric field application efficiency is higher than in the case where the confronted electrodes are formed on the surfaces of the non-linear optical layer. In FIGURE 4(b), reference numeral 6 designates a transparent substrate supporting the non-linear optical layer 1, etc.

The polarizing board 3 and the analyzing board 4 formed on both sides of the non-linear optical layer 1 may be made of a conventional polarizing film or polarizing prism. However, in order to reduce the thickness of the display unit, it is preferable to use the polarizing film.

In the embodiment shown in FIGURE 1, the polarizing board 3 is spaced from the non-linear optical layer 1, and the analyzing board 4 is in closed contact with the latter 1. However, the display unit may be so modified that the polarizing board 3 is in close contact with the layer 1, and the analyzing board 4 is also spaced from the layer 1. Alternatively, the two boards 3 and 4 may be in contact with the layer 1. In addition, as shown in FIGURES 4(a) and (b), transparent substrates may be disposed between the polarizing board 3 and the non-linear optical layer 1, and between the analyzing board 4 and the non-linear optical layer. As described above, the polarizing board 3 and the analyzing board 4 are equivalent to each other in construction. Therefore, if the light is applied in the opposite direction, then the polarizing board 3 will function as an analyzing board, and the analyzing board 4 will function as a polarizing board.

In general, the polarizing board 3 and the analyzing board 4 are so positioned that the directions of polarization are at 90° to one another. However, the directions of polarization may be changed according to the directivity of elliptic polarization which is inherent in the material of the non-linear optical layer 1, the direction in which the plane of polarization turns when an electric field is applied to each picture element part G, or the relationships between the electric field and the display.

The display unit thus constructed may be combined with a light source such as a planar light emitting element, so as to display picture data or the like. Furthermore, the display unit of the invention may be combined with a light source or a projecting optical system, so as to be used as a projection type display unit which projects images on a screen.

Example 1

A concrete example of the display unit according to the invention will be described with reference to FIGURES 4(a) and (b).

First, four positive electrodes 25, each being approximately 1 mm x 0.2 mm x 1 mm in size, and one negative electrode 26 being about 2.5 mm x 0.2 mm x 1 mm in size were formed on a glass substrate 6 by wet plating in such a manner that each of the positive electrodes is spaced 0.1 mm from the negative electrode.

Next, a compound material was prepared by dissolving the azo dye, which are represented by the following chemical formula, in a binder of polymethyl methacrylate:

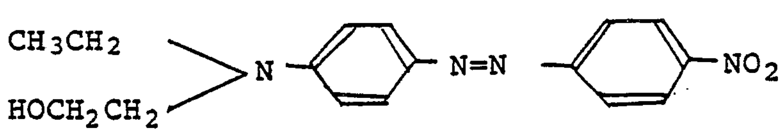

The compound material thus prepared was melted by heating it to 90°, which is higher than the glass transition temperature (Tg) of polymethyl methacrylate. The glass substrate was coated with the molten compound material. Thereafter, while an electric field of $0.62 \times 10^6$ V/cm was applied across the electrodes, the compound material was cooled down to room temperature, so that the non-linear optical material was oriented. Thus, the non-linear optical layer 1 was formed.

A polarization film, or the polarizing board 3, was bonded to the other side of the glass substrate in such a manner that its polarization direction formed a 45° angle with the direction of application of the electric field. A polarization film or the analyzing board 4 was bonded to the non-linear optical layer 1 in such a manner that its polarization direction was perpendicular to the direction of polarization of the polarizing board 3. Thus, a display unit having four picture elements G was fabricated as shown in FIGURE 4(a).

In the display unit thus fabricated, the ratio (Io/Ii) of an output light intensity (Io) to an input (incident) light intensity (Ii) was as follows:

$Io = Ii \sin^2 [(\pi \ell n^3 r V)/(2 \lambda d)]$

where Io is the output light intensity, Ii is the incident light intensity, $\lambda$ is the input light wavelength, $\ell$ is the

thickness of the non-linear optical layer, n is the refractive index of the non-linear optical layer, r is the primary electro-optical constant of the non-linear optical layer, d is the interelectrode space of each electrode pair, and V is the voltage applied to the electrode pair.

As is apparent from the above-described general equation, the output light intensity could be increased from 0% to 10% by changing the voltage V.

A light source which generates a light beam having a wavelength of 0.633 µm was disposed below the display unit, and voltage sources were connected to the electrodes. Under this condition, the voltages applied to the picture element parts were gradually increased. In this operation, it was observed that the state of the picture element part was changed from a light blocking state (0%) to a light transmitting state (10%). In this case, the settings and experimental data were as follows:

*Physical properties of the compound material of PMMA and azo dye:
Refractive index n = 1.52; and
Primary electro-optical constant r = 2.3 pm/V.
*Dimensions of the display unit:
Non-linear optical layer's thickness ℓ = 1 mm; and
Interelectrode distance d = 0.1 mm.
*Experimental data:
Input light wavelength λ = 0.633 µm; and
Voltage V across electrode pair = 1.6 KV

Example 2

The macromolecular compound material represented by the following chemical formula:

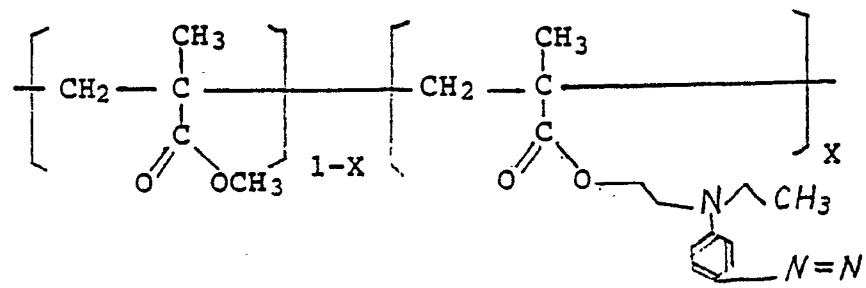

X=0.15

was dissolved in benzene and coated to the same susbstrate in example 1 by a spin coat method. The solvent was removed under vacuum. The layer was heated to a temperature of 850 °C and then cooled to a room temperature while an electric field of 850 kV/cm was applied. As a result, the non-linear optical material was oriented and the non-linear optical layer was formed. The primary electro-optical constant of the layer was 10 pm/V. When the applied voltage was changed as in example 1, the output light intensity was changed by 33%.

Example 3

Compounds represented by the following chemical formula:

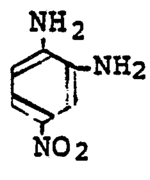

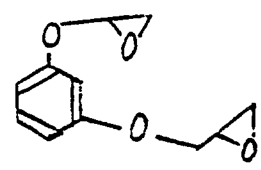

were reacted at a temperature of 140 °C so that a polymer soluble in a solvent was formed. A macromolecular material layer was formed by the spin coat method from a solution of the polymer and the solvent. Then it was heated to a temperature of 140 °C so as to proceed with the cross-linking reaction

while an electric field of 800 kV/cm was applied so that the non-liner optical layer was formed. The primary electro-optical constant of the layer was 4 pm/V. As in examples 1 and 2, when the applied voltage was changed, it was observed that the output light intensity was changed. Further, the same performance was observed after the layer was let alone for 500 hours at a room temperature.

Example 4

Polyoxytetramethylene having an average molecular weight of 980 and having hydroxyls at the both ends thereof, and triethylsilyl were reacted in accordance with the following chemical equation (1):

$$HO\text{-}R\text{-}O \xrightarrow{k} K^+O^-\text{-}R\text{-}O^-K^+$$

$$\xrightarrow{CH_2=CHCH_2Br} CH_2=CHCH_2O\text{-}R\text{-}OCH_2CH=CH_2$$

$$\xrightarrow[Pt]{HSi(OR')_3} (R'O)_3SiCH_2CH_2CH_2O\text{-}R\text{-}OCH_2CH_2CH_2Si(OR')_3$$

...... (1)

where R is a macromolecular material and R′ is an alkyl. Thus obtained macromolecular material and tetraethoxysilane at a mole ratio of 0.49:1 were mixed in a solvent which is a mixture of ethanol and tetrahydrofuran at a ratio of 1:1, and then were stirred for 30 minutes at a room temperature under a catalyst of hydrochloric acid. Then, a compound represented by the following chemical formula:

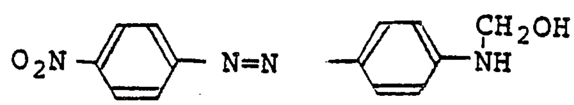

was added to the mixture at a mole ratio of 1/10 with respect to the macromolecular material. After reflux was conducted for 1 hour with stirring, gelationzation was conducted in an open system. Before the gelationzation was completely finished, an electric field of 100 kV/cm was applied and the solidification was completely conducted under the applied field. The primary electro-optical constant of the material was 0.5 pm/V and as in examples I, 2 and 3, it was observed that the output light intensity was changed when the applied voltage was changed.

In the display unit of the invention, according to the so-called "Pockels effect", the refractive index of the non-linear optical material at each picture element part is changed with the electric field applied thereto, thereby adjusting the intensity of the output light of the picture element part which is provided through the analyzer. That is, in the display unit, the output light changes with the levels of the input signals applied to the picture element parts, thus displaying a picture or the like.

The picture element parts are formed by arranging a plurality of electrode pairs on the flat, plate-shaped, non-linear optical layer. Therefore, the display unit of the invention is lightweight and small in thickness when compared with conventional display units.

The refractive indexes of the picture element parts are quicker in response to input signals than the liquid crystal orientation. Therefore the display unit can display a clear picture high in motion, and it is easy to increase the size of the screen, to improve the picture quality, and to increase the operating speed. In addition, the display unit can be driven with a much lower drive voltage than that used in the EL or plasma light emission, with the result that the power consumption is reduced.

In the case where the non-linear optical layer is of the compound material which is prepared by dispersing the non-linear optical material in the binder such as macromolecular material or glass material, the non-linear optical layer can be formed by a conventional method of molding the aforementioned

macromolecular; that is, it can be readily molded, and in addition, its configuration and dimension can be freely determined.

In the case where the electrodes forming the electrode pairs are arranged in such a manner that they are buried in the non-linear optical layer, the application of electric fields to the picture element parts is more effective, with the result that the display unit can be operated with high efficiency.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A display unit comprising:
a flat, plate-shaped, non-linear optical layer having a secondary non-linear optical effect, said layer having a first and second side;
a plurality of electrode pairs arranged on said non-linear layer to form picture element parts therein, said electrode pairs applying electric fields to said picture elements parts to change a polarization component of light applied to said picture elements;
a polarizer, arranged the first side of said non-linear optical layer, for applying a linearly polarized light beam to said picture element parts; and
an analyzer, arranged on the second side of said nonlinear optical layer, for transmitting only a particular polarization component of elliptically polarized light beam which is generated upon application of said linearly polarized light beam to said picture element parts.

2. A display unit as claimed in claim 1, wherein said non-linear optical layer is made of a compound material which is prepared by dispersing a material having a secondary non-linear optical effect in a binder.

3. A display unit as claimed in claim 2, wherein said binder is made from the group consisting of macromolecular materials or glass material.

4. A display unit as claimed in claim 1, wherein said non-linear optical layer is made of a compound material which is prepared by bonding a material having a secondary non-linear optical effect to a side chane of a macromolecular material.

5. A display unit as claimed in claim 3, wherein said macromolecular material is cross-linked.

6. A display unit as claimed in claim 4, wherein said macromolecular material is cross-linked.

7. A display unit as claimed in claim 1, in which electrodes forming each of said electrode pairs are buried in said non-linear optical layer.

8. A display unit as claimed in claim 1, wherein said electrodes are substantially rectangular in shape.

9. A method of forming a display unit comprising the steps of:
dispersing a material having a secondary non-linear optical effect in a binder material so as to form a non-linear optical layer having a secondary non-linear optical effect;
arranging a plurality of electrode pairs on said non-linear optical layer so as to form picture element parts;
arranging a polarizer on a first side of said non-linear optical layer to apply a linear polarized light beam to said picture element parts; and
arranging an analyzer on a second side of said non-linear optical layer to transmit only a particular light beam to the picture element parts.

FIG. 1

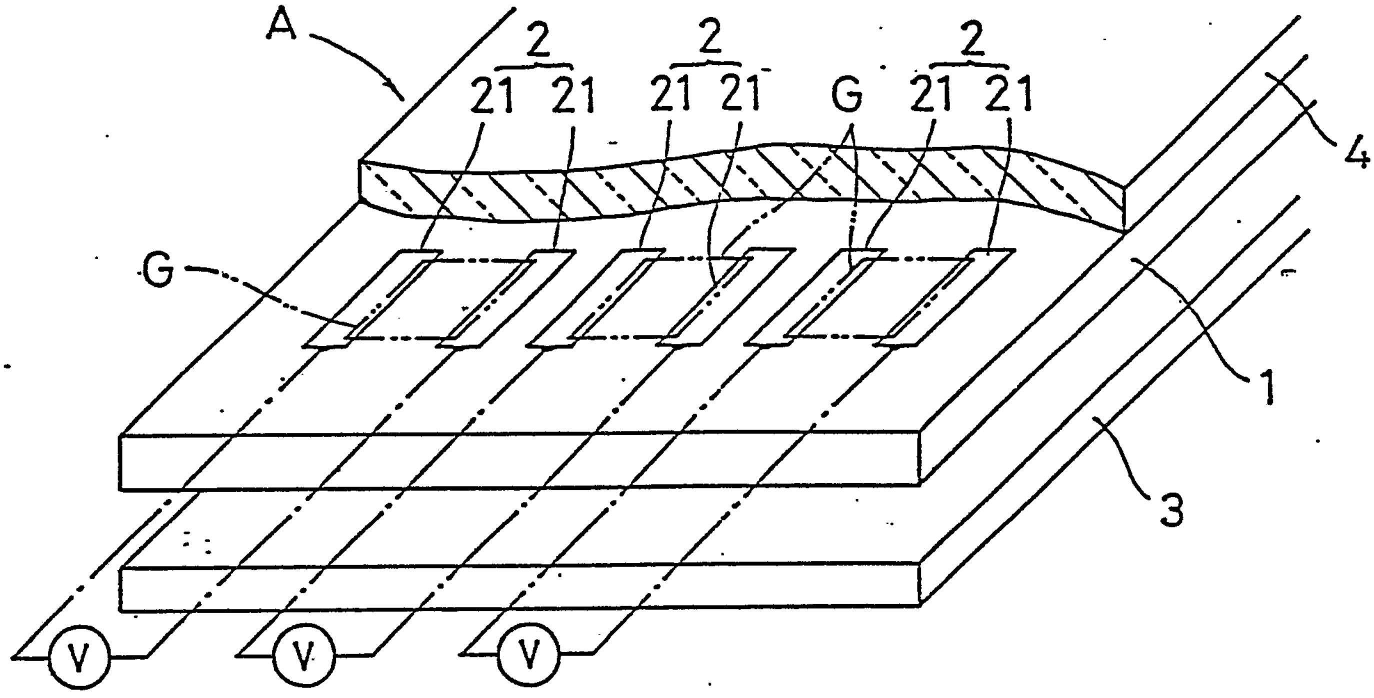


Fig. 2(a)

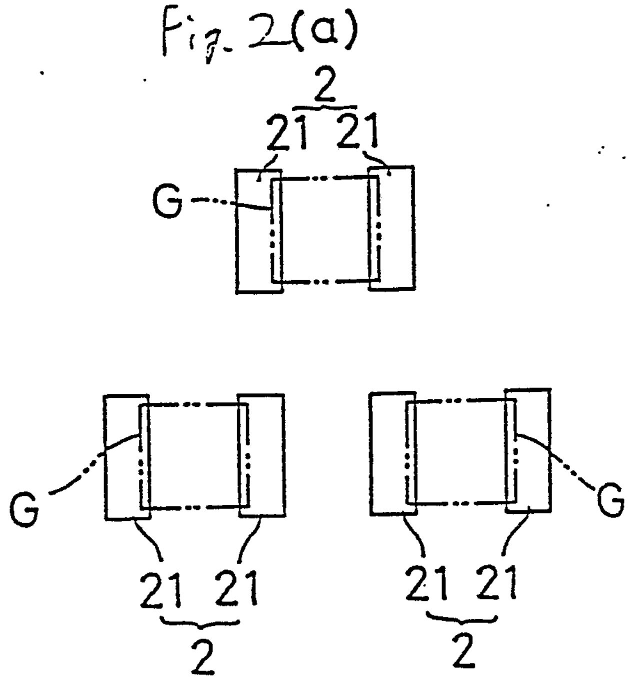


Fig. 2(b)

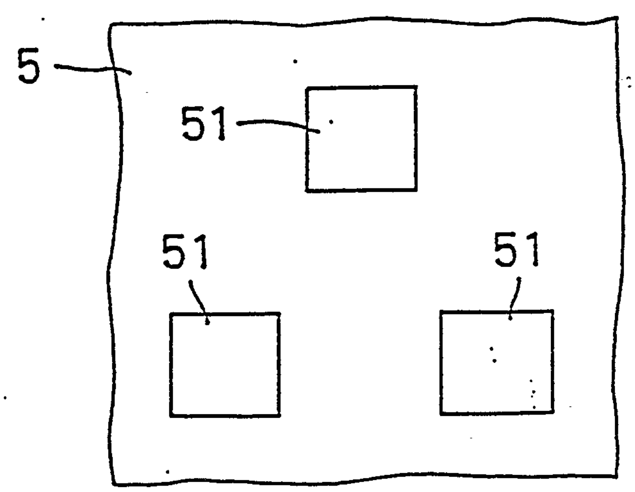

Fig. 3 (a)

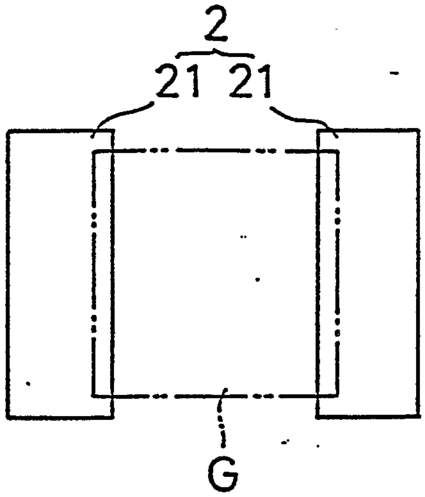


Fig. 3 (b)

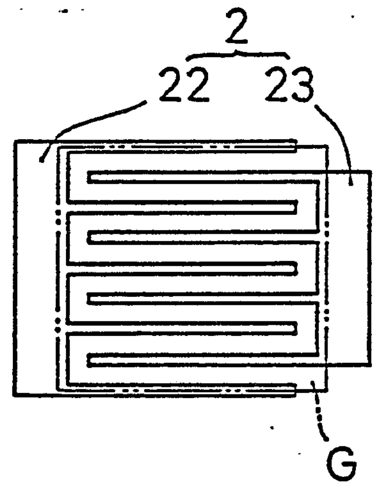


Fig. 3 (c)

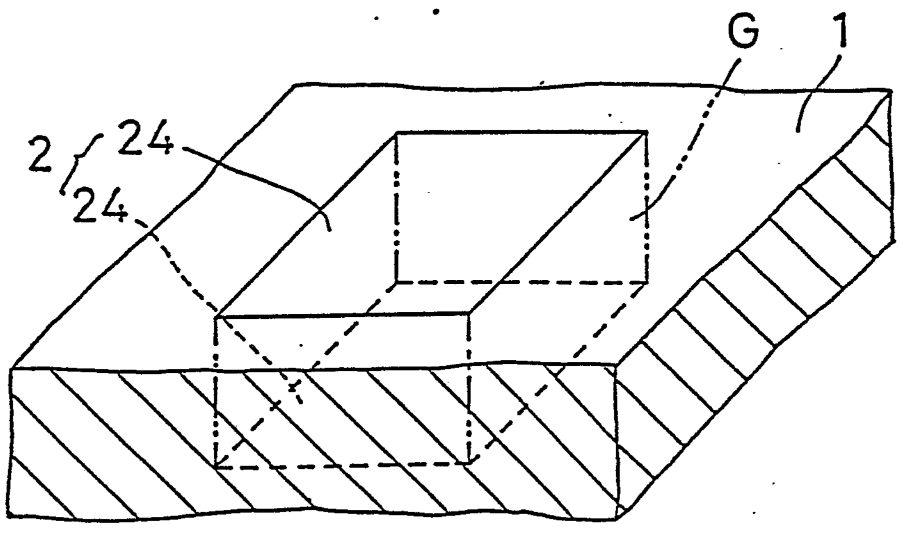

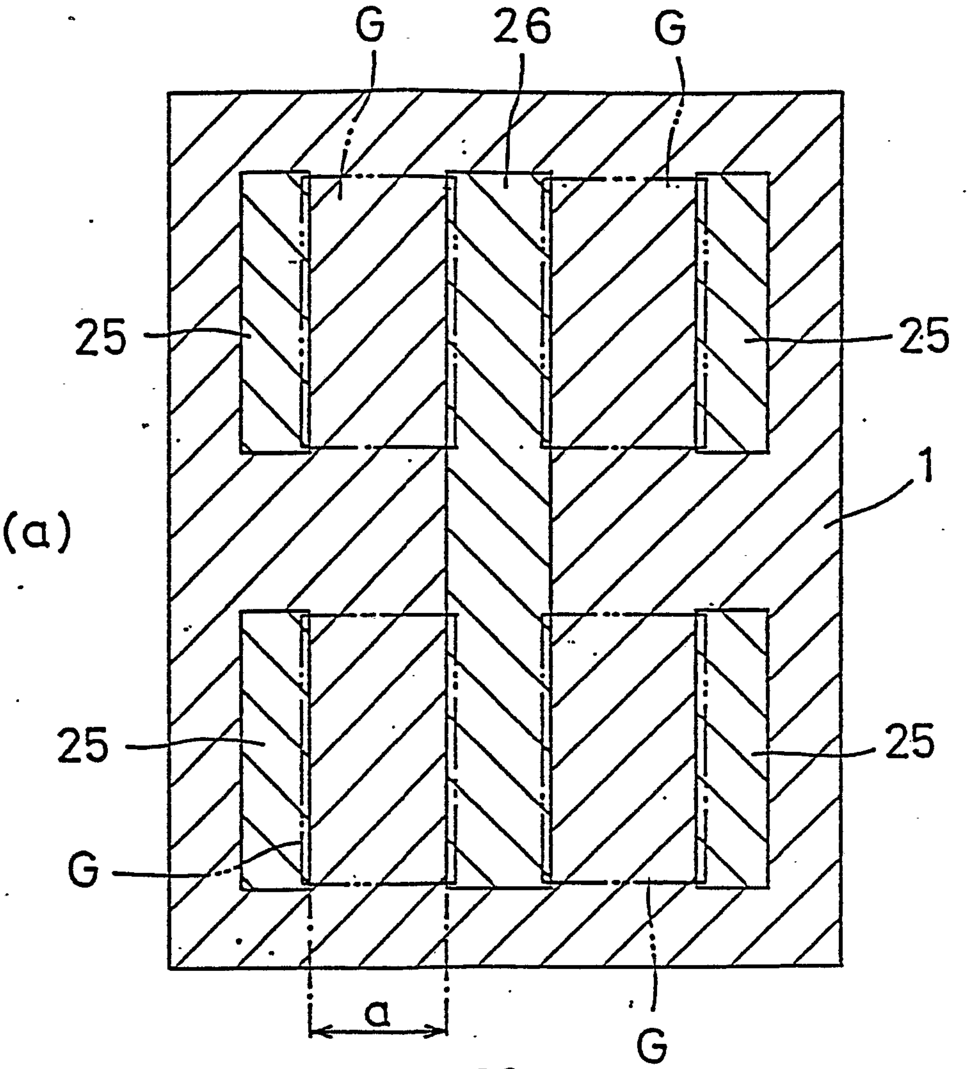


Fig. 4 (a)

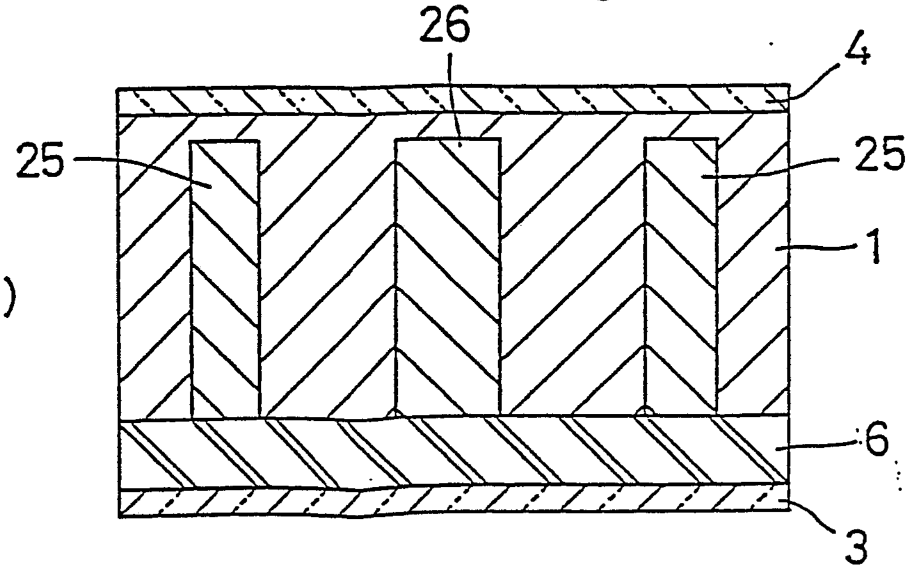


Fig. 4 (b)

European Patent Office

# EUROPEAN SEARCH REPORT

Application number

EP 89118486.3

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.5) |
| X | DE - A1 - 3 040 953 (MATSUSHITA) * Page 4, line 29 - page 6, line 11; page 9, line 9 - page 11, line 21; fig. 1-3 * -- | 1 | G 02 F 1/35<br>H 04 N 3/12 |
| A | US - A - 4 113 352 (SCHAFFT) * Abstract; column 2, line 27 - column 3, line 26; fig. 4 * -- | 1,8,9 | |
| A | US - A - 4 428 873 (MURAYAMA et al.) * Column 1, lines 10-29; column 3, line 38 - column 5, line 16; column 7, line 48 - column 8, line 12; column 8, line 49 - column 9, line 2 * -- | 1-3,9 | |
| | | | TECHNICAL FIELDS SEARCHED (Int. Cl.5) |
| A | WO - A1 - 80/01 225 (WESTERN ELECTRIC) * Page 1, line 9 - page 3, line 36; claim 1 * -- | 1 | G 02 F<br>G 09 F<br>H 04 N |
| A | WO - A1 - 88/02 131 (AKTIESELSKABET) * Page 1, line 5 - page 4, line 6; page 5, lines 19-32; claim 5 * -- | 2,3,9 | |
| A | LEO LEVI "Applied Optics", vol. 2: "A Guide to Optical System Design", 1980 JOHN WILEY & SONS, New York, Chichester, Brisbane, Toronto pages 282-302 * Chapters 14.3, 14.3.1.2., 14.3.2., 14.3.6., 14.3.6.1., 14.3.7. * ---- | 1 | |

The present search report has been drawn up for all claims

| Place of search | Date of completion of the search | Examiner |
|---|---|---|
| VIENNA | 09-01-1990 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document